Europäisches Patentamt

European Patent Office

Office européen des brevets

(11) Publication number: **0 594 130 A1**

# EUROPEAN PATENT APPLICATION

(21) Application number: **93116886.8**

(51) Int. Cl.5: **B60L 3/10**

(22) Date of filing: **19.10.93**

(30) Priority: **22.10.92 JP 284161/92**

(43) Date of publication of application:
**27.04.94 Bulletin 94/17**

(84) Designated Contracting States:
**DE FR**

(71) Applicant: **HITACHI, LTD.**
**6, Kanda Surugadai 4-chome**
**Chiyoda-ku, Tokyo 100(JP)**
Applicant: **Hitachi Techno Engineering Co.,**
**Ltd.**
**3, Kanda-Surugadai 4-chome**
**Chiyoda-ku Tokyo(JP)**

(72) Inventor: **Horie, Akira**
**2915-16, Mawatari**
**Katsuta-shi(JP)**
Inventor: **Matsui, Takayuki**
**Sitiforam Kamihongo 228,**
**2113-1, Kamihongo**
**Matsudo-shi(JP)**
Inventor: **Miyaji, Yoshihiro**
**Hitachi Daini Shimuraryo,**
**43-10, Nakadai-2-chome**
**Itabashi-ku, Tokyo(JP)**
Inventor: **Suzuki, Kazuya**
**2565-18, Sugaya,**
**Nakamachi**
**Naka-gun, Ibaraki-ken(JP)**

(74) Representative: **Strehl Schübel-Hopf Groening**
**& Partner**
**Maximilianstrasse 54**
**D-80538 München (DE)**

(54) **Control equipment of rolling stock and electric rolling stock using the same.**

(57) The present invention relates to a control equipment of rolling stock and particularly to electric rolling stock travelling by adhesion between a driving wheel and a rail tread. The control equipment is provided with driving means (2,3) for driving a driving wheel of the rolling stock and torque controllers (5,7,8) for controlling a torque generated by the driving means (2,3). It stores, when a slipping detection signal is generated, a motor current and a rolling stock speed at that time at every speed, controls the motor by commanding the stored current with respect to the speed of the rolling stock, and recovers the storage contents under predetermined conditions. With this, it is possible to accelerate or decelerate the rolling stock, in particular electric rolling stock by an appropriate torque which does not exceed an adhesion limit, thus reducing generation of slipping and skidding and making it comfortable to ride in.

# FIG. 1

## BACKGROUND OF THE INVENTION

### Field of the Invention

The present invention relates to a control equipment of the rolling stock travelling by adhesion between a driving wheel and a driving wheel tread and a control equipment of an electric rolling stock using the same, and more particularly to an apparatus for preventing slipping of a driving wheel.

### Description of the Related Art

As an apparatus for preventing slipping of the rolling stock, it has been heretofore proposed that an adhesion coefficient between a wheel and a rail is always computed and a current command after readhesion is obtained by an electric current computed with an adhesion coefficient when slipping is detected as described in JP-A-1-243803. Namely, in the prior art described above, there are disclosed means for detecting slipping and skidding of the rolling stock, means for computing generated torque of a motor, means for computing acceleration of the motor, means for computing an adhesion coefficient between a wheel and a rail from computed or detected acceleration and generated torque of the motor, weight of the rolling stock and the moment of inertia of the motor, and that the adhesion coefficient is always computed and the motor current corresponding to the generated torque of the motor computed by the generated torque computing means is computed at the same time, and, when slipping or skidding is detected by the means for detecting slipping and skidding, the motor current corresponding to the time when the adhesion coefficient is at the maximum or in the vicinity thereof is computed from the adhesion coefficient computed before generation of slipping or skidding and immediately after generation thereof and the motor current corresponding to the generated torque of the motor is given as a current command of the motor.

In the prior art described above, however, when slipping is generated, the current command is lowered to a magnitude corresponding to the adhesion coefficient at that point of time univocally. Therefore, the current command is converged to the smallest adhesion coefficient value. As a result, there is a problem that sufficient acceleration performance is unobtainable.

Further, since the adhesion coefficient is computed from the moment of inertia, the acceleration, the generated torque and the axle load of the motor, such a problem is brought out that errors are generated by variation of the moment of inertia when slipping is generated, and furthermore the operation is complicated.

## SUMMARY OF THE INVENTION

It is a principal object of the present invention to provide a control equipment of the rolling stock capable of controlling so as to be comfortable to ride in without sacrificing acceleration performance by minimizing the generation of slipping of the rolling stock.

It is another object of the present invention to provide a control equipment of the rolling stock for minimizing the generation of slipping of the rolling stock with a simple structure.

It is still another object of the present invention to prevent acceleration performance of the rolling stock from being marred automatically against recovery of an adhesion coefficient with recovery of the weather or the like.

The principal object described above can be achieved by providing, in a control equipment of the rolling stock provided with a driving means for driving a driving axle of the rolling stock and a torque control means for controlling the torque generated by the driving means, a means in which a torque command given to the torque control means or a command equivalent to the torque command is provided in every travelling speed zone or at every equivalent value is provided, and the torque command or the command corresponding thereto is adjusted in every speed zone mentioned above or at every equivalent value.

Further, another object described above can be achieved, in a control equipment of an electric rolling stock provided with a motor for driving an electric rolling stock and a motor control means for controlling the motor, by providing means for detecting slipping of the driving axle of the electric rolling stock and means for giving a motor current when the slipping is detected to the motor control means as a current command.

According to the present invention, the objects described above are achieved by the operation described hereunder by structuring as described above.

There is an adhesion coefficient expressing a tread state as a quantity of state related to torque transmission between an axle and a rail, and attention is paid to the adhesion coefficient here. The adhesion coefficient varies depending on the speed of the rolling stock in addition to the weather, the tread state of a rail and track conditions such as curve and slope sections. Accordingly, in the present invention, means for generating a torque command is provided in every rolling stock speed zone so as to regulate the torque command. As a result, it is possible to obtain a torque smaller than the torque transmission limit between the axle and the rail, and it is also possible to drive the rolling stock with a torque in the neighborhood of the torque transmission limit by minimizing the generation of slipping even when the adhesion coefficient varies in accordance with the circumferential speed of the axle and the adhesion coefficient has varied with the change of the weather or the like.

Further, the structure being made so that the current at a point of time when the electric rolling stock slips is adopted as the speed command thereafter, it is possible to set a driving torque to the adhesion limit without performing complicated computation.

## BRIEF DESCRIPTION OF THE DRAWINGS

Embodiments will be described hereinafter with reference to the drawings.

FIG. 1 is a control block diagram showing an embodiment of the present invention;

FIG. 2 is a control block diagram showing an outline of an inverter controller used in the present invention;

FIG. 3 is a control block diagram showing an outline of another embodiment of an inverter controller used in the present invention;

FIG. 4 is a control block diagram showing a structure of a slipping readhesion controller applied to the inverter controller shown in FIG. 3;

FIG. 5 is a control block diagram showing a structure of a slipping readhesion controller used in the present invention;

FIG. 6 is a control block diagram showing a structure of another slipping readhesion controller;

FIG. 7 is a characteristic diagram for explaining the operation of a readhesion controller;

FIG. 8 is a diagram showing an embodiment for explaining a way of thinking of the present invention;

FIG. 9 shows characteristic diagrams for explaining the principle of operation of the present invention;

FIG. 10 is a characteristic diagram showing the operation of an adhesion controller 9 of the present invention;

FIG. 11 is a flow chart showing the operation of the present invention;

FIG. 12 is a time chart diagram for explaining conditions of recovery means of the present invention;

FIG. 13A and 13B are both characteristic diagrams for explaining the effects of an embodiment of the present invention; and

FIG. 14 is a block diagram showing skidding and readhesion control at time of regeneration control of the present invention.

## DESCRIPTION OF THE PREFERRED EMBODIMENTS

Slipping and skidding phenomena are fatal subjects in the rolling stock travelling by adhesion between a wheel and a tread. Particularly in the rolling stock for a railway system, high densification and lightening in weight have advanced, and readhesion control, slipping and skidding prevention (adhesion) control for obtaining a predetermined acceleration and deceleration performance have become an important subject. An embodiment of the present invention for solving this problem will be described.

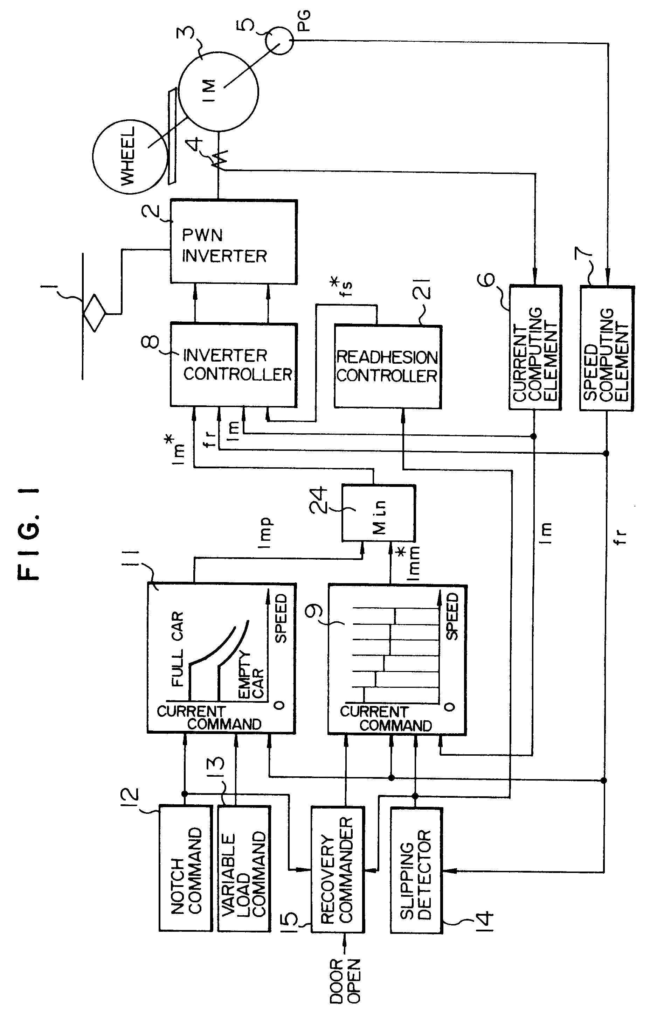

FIG. 1 is a control block diagram showing a readhesion and slipping prevention (adhesion) control equipment at time of power running of the electric rolling stock according to the present invention. Details of respective parts will be described later in due order.

The direct current received from a stringing through a pantagraph 1 is supplied to a PWM inverter 2, and the PWM inverter 2 converts direct current voltage into three-phase alternating voltage. An a.c. motor for driving the electric rolling stock (an induction motor 3 (a synchronous motor is satisfactory)) is driven by the alternating voltage.

The number of revolution of the induction motor 3 detected by a pulse generator 5 is inputted to a speed computing element 7 and converted into a rotor frequency fr, and is outputted to an inverter controller 8, a current command generator 11 and a slipping detector 14.

Further, the three-phase alternating current iu, iv and iw detected by a current detector 4 is inputted to a current computing element 6, respectively, and converted into a motor current Im, and is inputted to the inverter controller 8 and an adhesion controller 9.

The current command generator 11 generates a current command Imp (including characteristics of the induction motor 3) in a state of adhesion between a rail and an axle tread (at time of non-slipping) based on a notch command 12, a load compensating command 13 and a rotor frequency fr, and outputs Imp to a comparator 24.

The adhesion controller 9 having a function of reducing the number of generating times of slipping generates a current command Imm* which is optimum for preventing regeneration of slipping based on a slipping detection signal from the slipping detector 14, a recovery command signal from a recovery command unit 15, the motor current Im and the rotor frequency fr, and outputs Imm* to the comparator 24. The details of the adhesion controller 9 will be described later.

The comparator 24 selects a smaller output of the outputs from the current command generator 11 and the adhesion controller 9, and outputs it to the inverter controller 8 as an output current command Im* which is given to the induction motor 3 by the PWM inverter 2.

The inverter controller 8 computes a modulation factor command Vc* for controlling the magnitude of the output voltage of the PWM inverter 2 and an inverter output frequency command fi** based on the current command Im*, the motor current Im, the rotor frequency fr and the slip frequency fs*, and outputs the result to the PWM inverter 2.

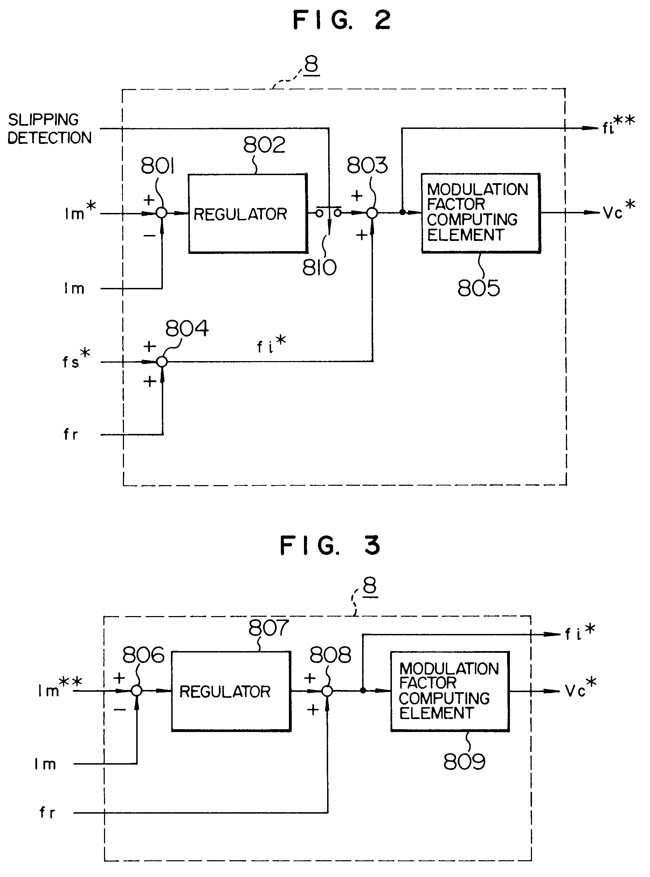

A block diagram showing the control of such PWM inverter 2 used in the present invention is shown in FIG. 2.

The inverter controller 8 is composed of adders 801, 803 and 804, a regulator 802 and a modulation factor computing element 805.

The current command Im* and the current detection signal Im are inputted to the adder 801, and the result obtained by computing a deviation therebetween is outputted to the current regulator 802. The current regulator 802 outputs a signal for correcting the slip frequency so as to delete this deviation to the adder 803.

On the other hand, a slip frequency command fs* (which is outputted from a readhesion controller described later) and the rotor frequency fr inputted to the inverter controller 8 are added to each other by the adder 804 so as to produce an inverter output frequency command fi*, which is inputted to the adder 803.

The adder 803 adds the output of the current regulator 802 and the inverter output frequency fi* to each other, and outputs an inverter output frequency fi** to a modulation factor computing element 805. The modulation factor computing element 805 computes the modulation factor command Vc* for controlling the magnitude of the output voltage in accordance with the inverter output frequency fi** and outputs Vc* to the PWM inverter 2.

Further, a switch 810 is structured so as to be opened when slipping is detected, and has a function of canceling the operation of a current control system at time of slipping.

The PWM inverter 2 outputs an alternating current of variable voltage and variable frequency based on the inverter output frequency fi** and the modulation factor command Vc*.

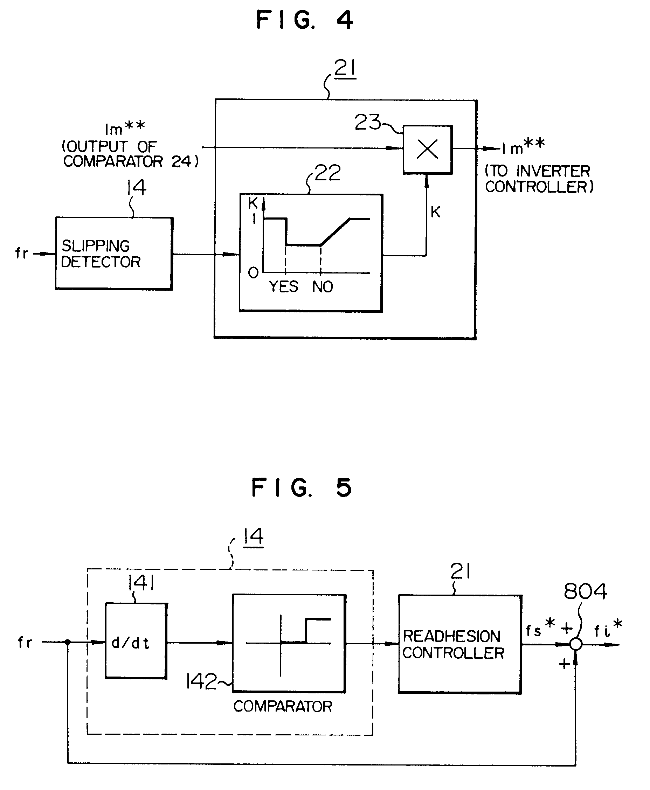

FIG. 3 is a control block diagram showing another embodiment of an inverter controller for controlling such PWM inverter 2, and FIG. 4 is a control block diagram showing a structure of a slipping readhesion controller applied to the inverter controller shown in FIG. 3.

The inverter controller 8 receives a current command Im** from a readhesion controller 21 shown in FIG. 4 described later, the current detection signal Im and the rotor frequency fr, and computes the deviation of the current in an adder 806 and outputs the result to a current regulator 807. The current regulator 807 generates such a slip frequency command fs* that eliminates such a deviation, and outputs fs* to an adder 808. In the adder 808, the slip frequency command fs* and the rotor frequency fr are added to each other, thereby to obtain the inverter output frequency fi*. The inverter output frequency fi* is outputted to the PWM inverter 2, and is also outputted to a modulation factor computing element 809. In the modulation factor computing element 809, an inverter output voltage Vc* proportional to the inverter output frequency fi* is computed and outputted to the PWM inverter 2.

Next, slipping detection and readhesion control will be described with reference to FIG. 4, FIG. 5 and FIG. 6.

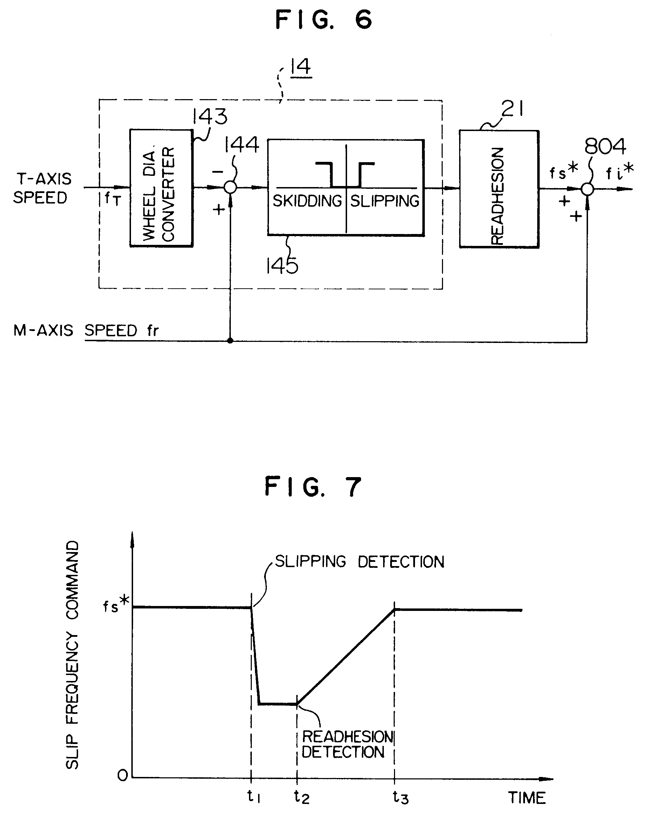

Here, FIG. 5 shows a structure of a slipping readhesion controller, and is a control block diagram in which slipping is detected when a differential value of the rotor frequency fr reaches a predetermined value or higher and readhesion is aimed at. Further, FIG. 6 is a control block diagram showing a structure of another slipping readhesion controller.

Various means have been proposed as means for detecting slipping, but any means may be adopted in the present invention so far as slipping is detected. An embodiment in which typical slipping detection means and readhesion control means are applied to the inverter controller 8 described above will be described herein.

In FIG. 4, a slipping detector 22 is composed of a differentiator (not illustrated) for computing a rate of change of the rotor frequency fr and a comparator (not illustrated), and the comparator determines to be slipping when the rate of change of the rotor frequency fr which is the output of the differentiator is at a predetermined value including normal acceleration of the electric rolling stock or higher, and outputs a slipping detection signal to a readhesion controller 21.

Further, FIG. 6 shows a structure for detecting slipping based on the difference from the speed of a non-driving wheel of the electric rolling stock.

In FIG. 4, a slipping detector 23 is composed of a wheel diameter conversion unit (not illustrated) for converting the speed of the non-driving wheel into an equivalent speed, an adder (not illustrated) and a comparator (not illustrated). The adder computes the deviation between the rotor frequency fr of the driving wheel and the output of the wheel diameter conversion unit and outputs it to the comparator. The comparator compares the inputted deviation with a reference value, and computes the slipping and skidding detection signal and outputs it to the readhesion controller.

The operation of the readhesion controller 21 will be described briefly with reference to FIG. 7.

The readhesion controller 21 usually outputs the slip frequency fs* of a fixed frequency, and reduces the slip frequency fs* shown in FIG. 2 in accordance with a preset rate when a slipping detection signal is received at time t1 so as to aim at readhesion of a driving wheel. When the slipping detection signal disappears and readhesion is detected at time t2, the slip frequency narrowed down previously is recovered to the magnitude before detecting slipping in accordance with the preset ratio.

In FIG. 2, since the output of the current regulator 802 is narrowed down by the switch 810 when slipping is detected, the slip frequency command given to the inverter is narrowed down as the result.

Further, an embodiment of slipping readhesion control in another inverter controller 8 will be described with reference to FIG. 3 and FIG. 4.

In this case, it is structured so that the motor current command is narrowed down instead of narrowing down the slip frequency command.

Namely, in FIG. 4, the current command Im* is outputted maintaining the value as it is to the inverter controller 8 at time of non-slipping. When slipping is detected, however, a coefficient K is reduced suddenly to a predetermined value by means of a coefficient generator 22, and multiplied by the current command Im* in a multiplier 23, thereby to generate a current command Im**, which is inputted to the inverter controller 8 shown in FIG. 3.

When the slipping detection signal changes from yes to no, the coefficient generator 22 increases the coefficient K at a predetermined rate, and the current command Im** which is the output of the multiplier 23 is also returned to the original current command Im* with the increase mentioned above.

A slipping detector 14 shown herein also performs similar operation when a slipping detector other than those shown in FIG. 5 and FIG. 6 is used. It is a matter of course that modification to some extent may be made in the block diagram shown in FIG. 1 by forming a structure shown in FIG. 3 and FIG. 4.

Now, in such recovery control, when recovery is made from temporary slipping such as a case when oil is attached to a rail, the state of the rail surface is recovered and readhesion can be expected. Since the adhesion coefficient is only lowered when the weather changes and rain falls, however, slipping is generated on the way of recovery, slipping and readhesion are repeated, and desired acceleration as the electric rolling stock becomes no longer obtainable.

Therefore, according to the present invention, when slipping is generated again at time of recovery and a slipping detection signal is detected, the inverter output current (motor current) at that point of time is fetched and stored in a memory, and the torque of the motor is controlled thereafter with the stored current as a current command. By doing so, it is possible to judge whether slipping is temporary or not, thereby to prevent useless lowering of the torque.

Furthermore, the speed when slipping is detected is stored, and the inverter output current (motor current) when reslipping is generated is stored as the current command at the stored speed (zone). Since the current command (torque command) at the adhesion (non-slipping) limit at the speed is learnt in every speed zone, the slipping prevention (adhesion) control is executed in every speed zone as the result. Accordingly, an original current command (torque command) is outputted in a speed zone where a predetermined adhesion coefficient is obtainable, and a current command at the adhesion (non-slipping) limit is outputted in a speed zone where it is unobtainable. Thus, it is possible to check lowering of acceleration performance of the electric rolling stock while preventing slipping.

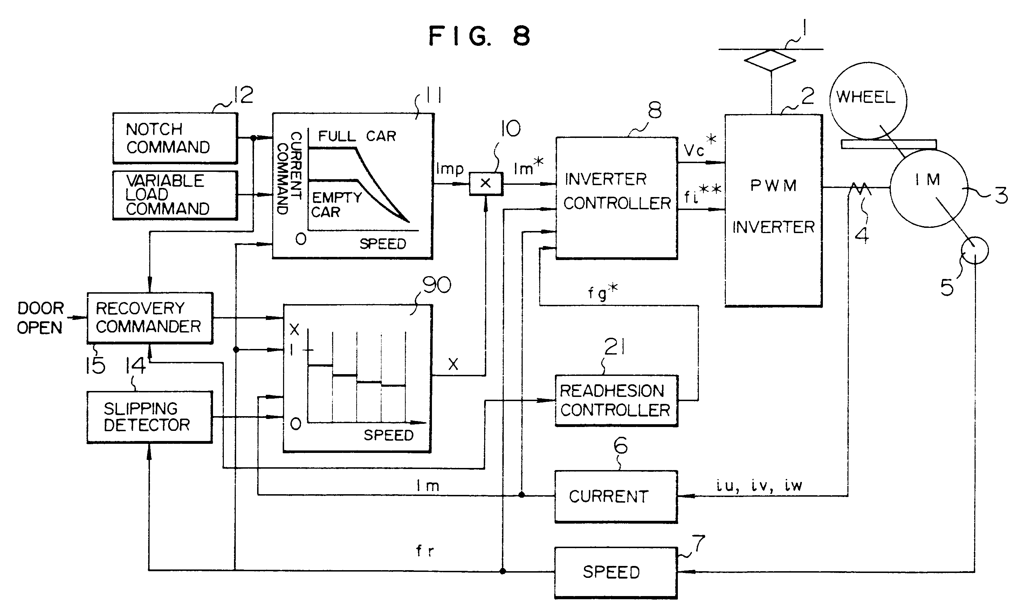

The way of thinking described above on slipping prevention control of the present invention will be explained hereinafter with reference to the embodiment shown in FIG. 8.

By learning the motor speed and the torque at a point of time when slipping is detected (slipping at time of recovery or slipping at the first time), it is possible to know the adhesion coefficient between a rail and a wheel tread with respect to the speed at that time.

The generated torque is known by using the motor current Im due to the fact that the torque of a motor is almost proportional to a motor current.

An adhesion coefficient $\mu$ is expressed by the following expression with the ratio of the motor current Im at time of slipping to the motor current Imp at time of non-slipping under normal conditions. Where $\mu_0$ is an expected adhesion coefficient at time of non-slipping under normal conditions

$$\mu = \mu_0 * Im/Imp \quad (1)$$

According to the present invention, generation of slipping is prevented by outputting a torque of a magnitude which does not exceed $\mu$ in accordance with the adhesion coefficient $\mu$ between the rail and the wheel tread when slipping is detected and thereafter at a speed when slipping is detected.

Now, in FIG. 8, a tread state computing element 90 stores a ratio x of the motor current Im at time of slipping to the motor current Imp at time of non-slipping under normal conditions corresponding to the ratio of the adhesion coefficient $\mu$ at time of slipping to the expected adhesion coefficient $\mu_0$ at time of non-slipping under normal conditions with respect to the speed at a point of time when slipping is detected. The rolling stock speed when slipping is detected is obtainable from the slipping detection signal and the rotor frequency fr.

The stored x is outputted to a multiplier 10 for the rotor frequency fr. In the multiplier 10, the current command Im* is computed by the following expression:

$$Im^* = Imp^* \times x^* \times A \qquad (2)$$

$$A \leqq 1 \qquad (3)$$

Where, A is a coefficient for outputting a torque having a magnitude which does not exceed the adhesion coefficient $\mu$ between the rail and the wheel tread when slipping is detected.

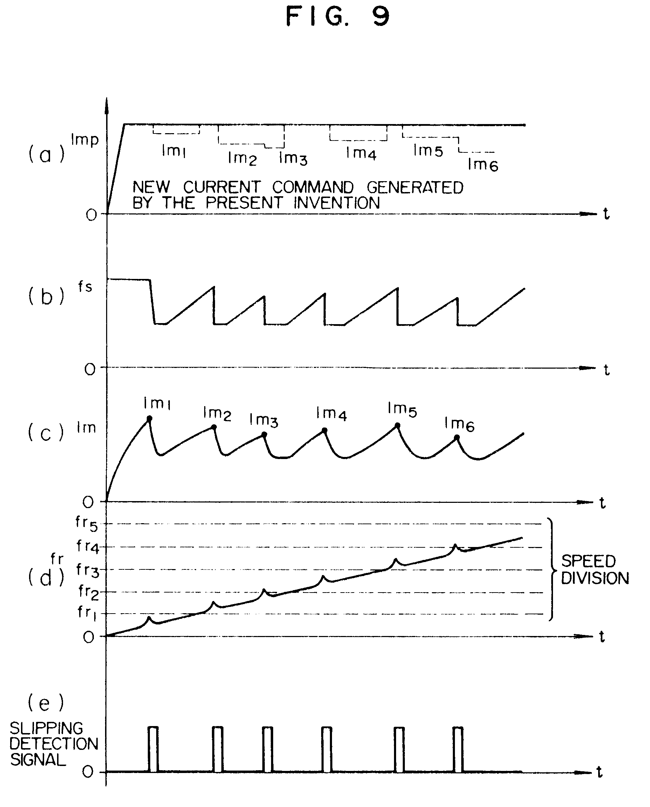

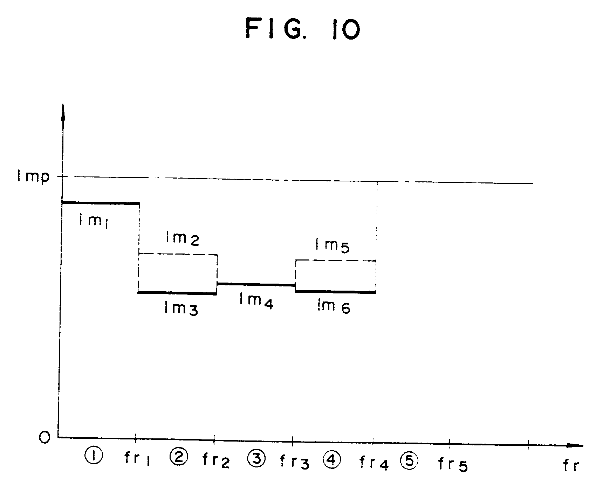

When the current command Im* is used, no slipping is generated unless the adhesion coefficient in that speed zone is lowered further. The foregoing is the way of thinking of slipping prevention control, but, in actuality, the motor current Im when slipping is detected is stored for every speed zone like the adhesion controller 9 shown in the embodiment in FIG. 1 without using the tread state computing element 90, and this current value is adopted as the current command Imm* thereafter. The operation of the present invention will be described with reference to FIG. 1, FIG. 9 and FIG. 10. Here, FIG. 9 shows characteristic diagrams for explaining the operation principle of the present invention, and FIG. 10 is a characteristic diagram showing the operation of the adhesion controller 9 of the present invention.

In FIG. 9, (a) shows a current command Imp, (b) shows a slip frequency command fs*, (c) shows a motor current (or an inverter output current), (d) shows a rotor frequency fr, and (e) shows a slipping detection signal. Besides, although it is not practical, a case when the current at time of the first slipping is adopted as the command instead of adopting the current in slipping at time of recovery control (returning to the slip frequency fs*) is shown for facilitating the understanding.

When slipping is generated, the rotor frequency fr changes suddenly as shown in (d). The slipping detector described previously detects this change, and outputs a slipping detection signal.

The rotor frequency fr and the motor current are fetched into the adhesion controller 9 by this slipping detection signal. Further, by the operation of the readhesion controller 21, the slip frequency fs* is lowered suddenly as shown in (b), thereby to aim at readhesion of the driving wheel.

The slip frequency fs* is recovered gradually after readhesion by the operation of the readhesion controller, and the motor current is also increased to the fetched current value with the above. As a result, the current command is given to the speed zone as shown with a broken line shown in (a).

In such a manner, the current command to the speed zone as shown in FIG. 10 is stored in the memory of the adhesion controller 9. Thereafter, the motor is controlled in accordance with the current command for every speed zone.

Current values Im3 and Im6 lower than Im2 and Im5 are stored in speed zones ② and ④, but this is because of a fact that slipping is generated again while travelling at Im2 and Im5 in the same speed zone, and the motor currents at those points of time are stored.

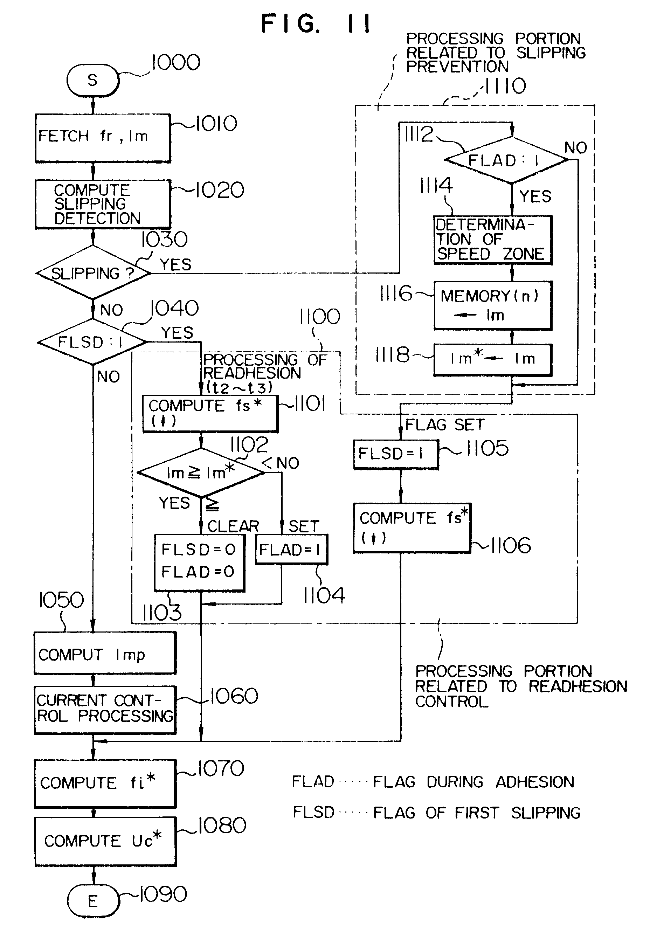

FIG. 11 shows a flow chart of slipping, readhesion and slipping prevention (adhesion) control of the present invention.

In a step 1010, processing for converting detected values of speed and current into digital quantities is performed. In a step 1020, determination on power running and regenerative brake operation, and computation processing for slipping detection is performed at time of power running. AT time of regenerative brake operation, it will be described later, but the minimum value of the current ratio for the speed zone in a step 1110 is read and adopted as a regenerative current command.

When it is determined that there is no slipping in a step 1030 and when it is not during readhesion control, a smaller current command among the current command value (stored in a step 1118) in the speed zone and the current command generated in the current command generator 11 is selected as the current command in a step 1050. Then, a predetermined inverter control processing is executed in steps 1060, 1070 and 1080.

Now, when slipping is detected in the step 1030, it is determined in a step 1112 whether FLAD is 1 or not. Since FLAD is not 1 in this case, the process is proceeded to the step 1050. Here, after setting the flag of FLSD = 1, the slip frequency is lowered and readhesion control is executed in a step 1106.

While repeating this loop, readhesion is made, and when the process is proceeded from the step 1030 to the step 1040, the operation to return the slip frequency is executed in a step 1010 since FLSD is 1. When it is determined that the motor current value is smaller than the command in a step 1102, FLAD = 1 is set in a step 1104, and this loop (1040, 1101, 1104) is repeated.

Now, when slipping is detected again during recovery control, the process is proceeded to a step 1114 through a step 1112. In the steps 1114 to 1118, the current command for every speed zone described above is generated. After the readhesion control is executed again, it is confirmed that the motor current has been increased to the previous current command value in the step 1102, and FLSD and FLAD are put to zero (step 1103).

Besides, when the present invention is structured using a microcomputer and a memory from a practical point of view, it is desirable that the adhesion controller 9 splits the speed to be stored into predetermined magnitudes and the motor current Im at time of slipping is stored for the split speed zones.

As the magnitude of the speed zone is made finer, a practical adhesion state between the rail and the wheel tread is detected more in detail, and acceleration of the electric rolling stock can be utilized to the utmost limit in accordance with $\mu$ at that time. On the other hand, since slipping has to be caused in order to detect the state, the number of slipping times is also increased inevitably in proportion to the split number and acceleration is lowered.

Therefore, it is recommended that the speed zone is split so as to make the number of slipping times as small as possible by maintaining a level of not marring acceleration of the electric rolling stock. For example, in the case of the electric rolling stock having the highest speed of 100 Km/h, it is desirable to make the speed zone to 20 Km/h by splitting the speed zone in four portions.

Further, the speed zones are not required to be at equal intervals, but can be set to route characteristics of the electric rolling stock.

Now, since a desired torque becomes unobtainable when the adhesion state is recovered if the current command is left as it is reduced as described previously, a means for recovering the reduced current command is provided in the present invention. This recovery is made not rapidly like the readhesion controller 21, but gently in accordance with conditions explained hereunder.

This operation will be described. The adhesion state between the rail and the wheel tread varies depending on curves, slopes or the like, and, when the magnitude of the adhesion coefficient $\mu$ between the rail and the wheel tread when slipping is detected is held indefinitely, the adhesion state is converged to the minimum value of the adhesion coefficient $\mu$ in the travelling section and acceleration of the electric rolling stock becomes no longer obtainable sometimes. Further, when rain stops and the adhesion coefficient $\mu$ between the rail and the wheel tread is recovered, it is possible to recover acceleration of the electric rolling stock to the magnitude at normal time of no slipping by recovering a stored current command Imm* (adhesion coefficient $\mu$ or the ratio x of the motor current Im at time of slipping to the motor current Imp at time of non-slipping under normal conditions) in accordance with the recovery of $\mu$.

Therefore, in the present invention, a signal for recovering the stored contents of the adhesion controller 9 to a predetermined magnitude is given from a recovery command signal generator 15. The recovery command signal generator 15 is one of important functions of the present invention since generation frequency of slipping becomes high if recovery is too fast, and acceleration becomes unobtainable if recovery is too slow.

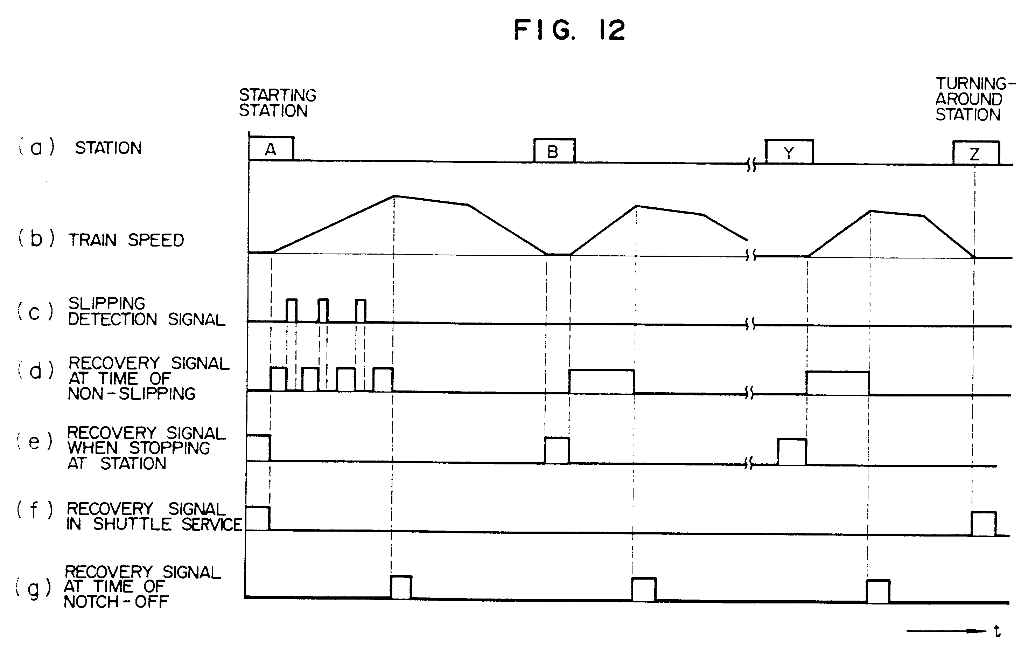

FIG. 12 shows characteristic diagrams for explaining the effects of the embodiment of the present invention.

In FIG. 12, (a) shows stop stations of an electric car, (b) shows a speed of the electric car, (c) shows a slipping detection signal, and (d) to (g) show recovery command signals related to the present invention.

(d) shows a signal for recovery with respect to time at a predetermined ratio at time of non-slipping, (e) shows a signal for recovery at a predetermined rate when the electric car stops at the station, (f) shows a signal for recovery at a predetermined rate at time of shuttle service of the electric car, and (g) shows a signal for recovery at a predetermined rate at time of notch-off of an operation command, which will be described hereinafter.

(d) Recovery at time of non-slipping

This is to correspond to the difference due to difference in route conditions in travelling sections and the increase of the adhesion coefficient due to recovery of the weather or the like, and recovery is made by increasing the stored values of all the memories uniformly independently of the speed zone at a rate of several A/sec. (e.g., 5A/sec in a rated current 200A/motor) with respect to the time during power running.

(e) Recovery when an electric car stands still at a station

For example, when the current command is lowered by approximately 50% with respect to the expected adhesion coefficient at time of non-slipping and recovery is made smoothly thereafter without producing slipping, the rate of recovery is set so as to recover completely among 5 to 10 stations. The number of station intervals is set based on route conditions.

(f) Recovery at time of shuttle service

This is to correspond to the difference of route conditions such as slopes, curves or the like, and to recover the storage values of all the memories with respect to the speed zone to 90 to 100% at a stretch. Therefore, in a shuttle service, the current command corresponding to the tread state is learnt over again with respect to the speed zone.

(g) Recovery at time of notch-off

Coasting running period of time is long in a long distance suburban type electric car, and it is conceivable that the adhesion state is changed in this period. In such a case, lowering of acceleration power at time of re-power running is dissolved by recovering several ten % at time of notch-off.

In the present invention, (d) to (g) are used in combination in accordance with route conditions of an electric car as a recovery command signal.

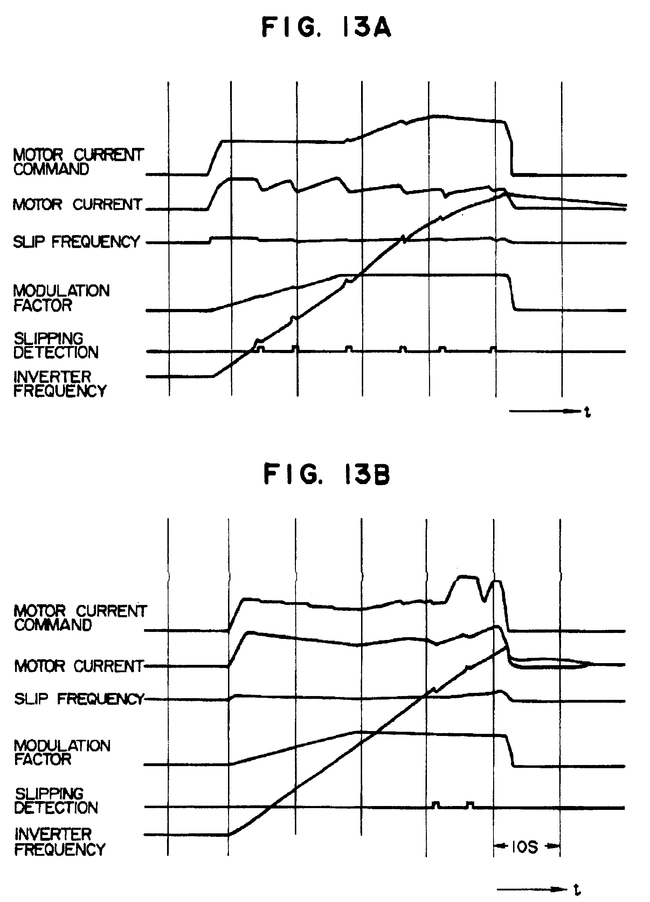

FIG. 13A and FIG. 13B show measured values of acceleration characteristics at time of power running when the present embodiment is not applied and when it is applied, respectively. The test has been performed under road conditions of upgrade of 100/00 and water spray, and rolling stock conditions of eight carriages in that four cars are electric motor coaches (one inverter and four motor control) and four cars are trailers with one unit cut (3M, 5T assuming full car).

FIG. 13A shows a case that the present invention is not applied, and FIG. 13B shows a case that the present invention is applied. In FIG. 13B where the present invention is applied, it is seen through the comparison between both cases that the current command changes with the increase in speed since a magnitude suitable for the tread state is stored in every speed zone before the travelling section, thus making it possible to reduce the number of generating times of slipping.

As a result, the hourly mean magnitude of the current supplied to the motor also increases, and acceleration period of time can be shortened even in the case of travelling in the same section.

The slipping, readhesion and slipping prevention (adhesion) control at time of power running has been described above, but slipping and adhesion control at time of regenerative running will also be described.

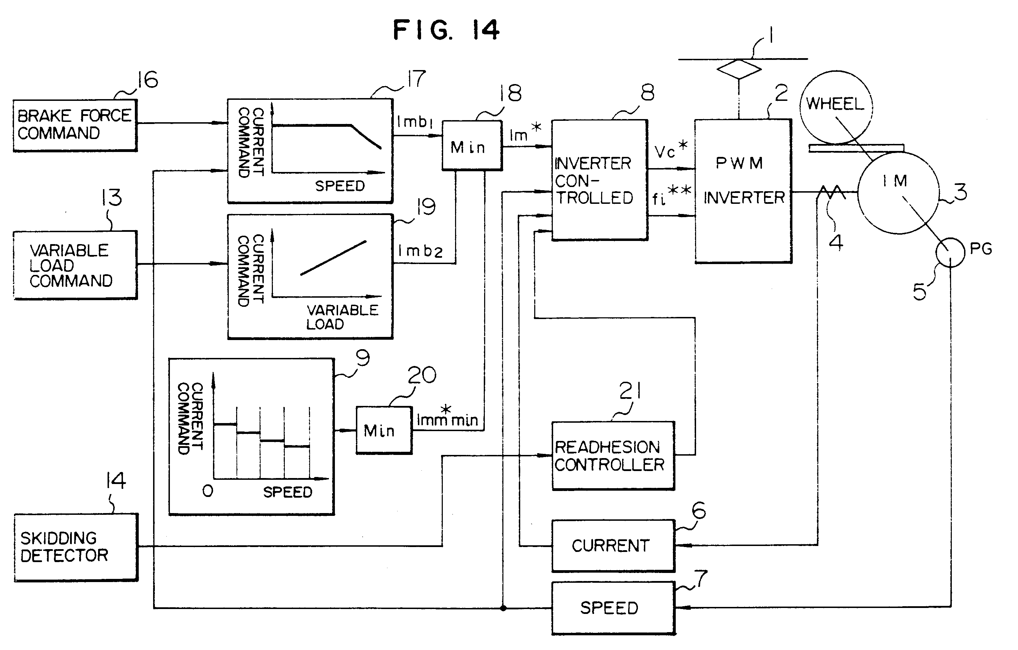

FIG. 14 shows a control structure at time of regenerative brake running.

The regenerative electric power generated by the induction motor 3 is converted into a direct current by the PWM inverter 2, and returned to the stringing through the pantagraph 1.

Further, the three-phase alternating current iu, iv and iw detected by the current detector 4 is converted into the motor current Im by the current computing element 6 and outputted. A current command generator 17 outputs a brake current command Imb1 computed based on a brake power command 16 and the rotor frequency fr to a comparator 18. A current command generator 19 outputs a brake current command Imb2 based on a variable load command 13. A comparator 20 outputs a current command Imm*min which is a motor current value showing the minimum adhesion coefficient between the rail and the wheel tread detected during power running which is stored in the adhesion controller 9.

The comparator 18 compares the brake current command Imb1, the brake current command Imb and the current command Imm*min with one another, and outputs the minimum value as the brake current command Im* to the controller 8 of variable voltage and variable frequency.

The controller 8 of variable voltage and variable frequency computes a modulation factor command Vc and a frequency command fi for controlling the magnitude of the output voltage of the PWM inverter 2 and the frequency command fi based on the current command Im*, the motor current Im and the rotor frequency fr and outputs the results to the PWM inverter 2.

Also, at time of regenerative brake running, skidding is detected similarly to the time of power running, and the torque transmission limit between the wheel and the rail at this time is computed from the output or the input of the inverter so as to store it while corresponding to the speed when skidding is detected, thus controlling the output of the inverter so as to become a torque smaller than the torque transmission limit between the wheel and the rail stored in accordance with the speed, thereby enabling it to reduce the number of skidding times.

Since the brake force is given by the sum of electric brake force and air brake force (joint use of electricity and air), however, it is difficult to detect the torque transmission limit between the wheel and the rail correctly as the time of power running. Further, when readhesion and skidding are repeated, longitudinal vibration is generated due to time lag between the air brake and the electric brake, thus making riding in uncomfortable sometimes.

Thus, according to the present invention, the minimum value of the magnitude obtained by computing the torque transmission limit between the wheel and the rail from the output or the input of the inverter at time of power running is obtained by the comparator 20 for application at time of regenerative running in order to reduce the number of times of exchanges of the brake force between the air brake and the electric brake.

Further, the brake force command 16 is now larger and now smaller than the adhesion limit, and the output Imb1 of the current command computing element 17 is adopted as the brake current command Im* in the comparator 18 when it is smaller than the adhesion limit in the present embodiment. In contrast with the above, when the brake force command 16 is larger than the adhesion limit, a brake current command Imb2 corresponding to the minimum value of the adhesion limit detected at time of power running is outputted as the brake current command Im*.

As a result, it is possible to reduce the number of skidding times generated at time of regenerative running so as to improve a feeling to ride in. Besides, since the shortage of the electric brake force against the brake force command is supplemented by the air brake force of a non-driving axle, the brake force as an electric car is satisfied.

An optimum embodiment of the present invention has been described above. Although it is not illustrated, another embodiment will be described in the next place.

The speed of the first embodiment shown in FIG. 1 may be adopted as the speed obtained from a speed computing element for computing the output of a speed detector attached to a trailing wheel. Although the speed of the driving wheel in the first embodiment produces errors in the relationship of the adhesion coefficient with respect to the speed since the speed of the motor shows disagreement with the speed of the electric car when slipping is generated, it can be improved because the speed of the trailing wheel and the speed of the electric car coincide each other by inputting the speed of the trailing wheel to the current command computing element 6 and the adhesion controller 9.

Besides, the current command has been described in the above-mentioned embodiment as a manipulated variable for controlling the torque. However, when the manipulated variable for controlling the torque is a torque command or a torque current command like vector control in an a.c. motor for instance, similar effects are produced by applying the present invention to these torque command and torque current command, which also falls within the scope of the present invention.

Further, the above-mentioned embodiment has been described using an inverter, but it is a matter of course that the present invention is also applicable to a chopper controller for driving a d.c. machine, a phase controller receiving an alternating current and driving a d.c. machine, an apparatus receiving an alternating current, converting it by a converter and driving an induction motor by an inverter, an automobile having an engine as a driving source, and a diesel locomotive and so on.

According to the present invention, it is possible to accelerate the rolling stock with an appropriate torque not exceeding the adhesion limit by adopting a torque outputted by the rolling stock when slipping is detected as a torque command thereafter, and to reduce the number of generating times of slipping, thereby to make ride-in comfortable. Further, since recovery is made automatically under predetermined conditions also for the recovery of the adhesion coefficient with recovery of the weather or the like, it is possible to prevent marring of acceleration performance of the rolling stock.

## Claims

1. A control equipment of rolling stock provided with driving means (2, 3) for driving a driving wheel of rolling stock and torque control means (5, 7, 8) for controlling a torque generated by the driving means (2, 3), comprising means (9, 11) for providing a torque command or a command corresponding thereto given to said torque control means (5, 7, 8) in every travelling speed zone of the rolling stock or value equivalent thereto and for regulating the torque command or a command corresponding thereto with respect to said every speed zone or equivalent value.

2. A control equipment of an electric rolling stock provided with a motor (3) for driving electric rolling stock and motor control means (5, 7, 8) for controlling the motor (3), comprising means (14) for detecting slipping of a driving wheel of said electric rolling stock and means (9) for giving a motor current at a point of time when the slipping is detected to said motor control means (5, 7, 8) as a current command.

3. A control equipment of an electric rolling stock provided with a motor (3) for driving electric rolling stock and motor control means (5, 7, 8) for controlling the motor (3), comprising means (14) for detecting slipping of a driving wheel of said electric rolling stock, means (21) for outputting a readhesion recovery command to said motor controller (8) reacting to the existence of a slipping detection signal, and means for giving a motor current at a point of time when slipping is detected to said motor control means (5, 7, 8) as a current command when slipping is detected again at time of recovery control.

4. A control equipment of an electric rolling stock provided with a motor (3) for driving electric rolling stock and motor control means (5, 7, 8) for controlling the motors (3), comprising means (17) for generating a current command given to said motor controller (8) for every speed zone or equivalent value of said electric rolling stock, means (14) for detecting slipping of a driving wheel of said electric rolling stock, and means (9) for regulating a current command of a speed zone or an equivalent value of said electric rolling stock corresponding to the speed of the electric rolling stock reacting to the existence of slipping.

5. A control equipment of an electric rolling stock provided with an induction motor (3) for driving the electric rolling stock, an inverter (2) for supplying a variable voltage variable frequency alternating current to the induction motor (3), means (21) for generating a slip frequency command based on a command of said motor current and a deviation of said motor current, and means (8) for obtaining an inverter frequency command by adding the slip frequency command and the revolving frequency of said induction motor (3) to each other, comprising means (14) for detecting slipping of a driving wheel of said electric rolling stock, and means (24) for adopting said motor current detection value at a point of time when slipping is detected as said motor current command.

6. A control equipment of an electric rolling stock provided with an induction motor (3) for driving the electric rolling stock, an inverter (2) for supplying a variable voltage variable frequency alternating current to the induction motor (3), means (21) for generating a slip frequency command based on a command of said motor current and a deviation of said motor current, and means (8) for obtaining an inverter frequency command by adding the slip frequency command and the revolving frequency of said induction motor (3) to each other, means (14) for detecting slipping of a driving wheel of said electric rolling stock, means (9) for reducing said slip frequency command when slipping is detected, and control means for recovering this slip frequency command, comprising means, when slipping is detected during a period when control for recovering said slip frequency command is being made, for storing said motor current at this point of time in a region corresponding to the travelling speed of the electric rolling stock at this point of time, and means for adopting the current value stored in this speed region as said motor current command in this speed region.

7. A control equipment of an electric rolling stock according to Claim 5 or Claim 6, further comprising means for recovering said motor current command at a predetermined rate while said electric rolling stock is making power running.

8. A control equipment of an electric rolling stock according to Claim 5 or Claim 6, further comprising means for recovering said motor current command by a predetermined quantity when said electric rolling stock stops at a station.

9. A control equipment of an electric rolling stock according to Claim 5 or Claim 6, further comprising means for recovering the whole quantity of said motor current command when said electric rolling stock stops at a turn-around station.

10. A control equipment of an electric rolling stock according to Claim 5 or Claim 6, further comprising means for recovering said motor current command by a predetermined quantity when said electric rolling stock notches off.

11. A control equipment of an electric rolling stock provided with an induction motor (3) for driving the electric rolling stock, an inverter (2) for supplying a variable voltage variable frequency alternating current to the induction motor (3), means (21) for generating a slip frequency command based on a command of said motor current and a deviation of said motor current, and means (8) for obtaining an inverter frequency command by adding the slip frequency command and the revolving frequency of said induction motor (3) to each other, means (14) for detecting slipping of a driving wheel of said electric rolling stock, means (9) for reducing said slip frequency command when slipping is detected, and control means for recovering this slip frequency command, comprising, when slipping is detected during a period in which control for recovering said slip frequency command is being made, means for storing said motor current at this point of time in a region corresponding to the travelling speed of the electric rolling stock at that point of time, means for adopting the current value stored in this speed region as said motor current command in this speed region, and means for adopting the minimum value among said stored current values as said motor current command.

# FIG. 1

EP 0 594 130 A1

# FIG. 2

# FIG. 3

# FIG. 4

<u>21</u>

23

Im**
(OUTPUT OF
COMPARATOR 24)

×

Im**
(TO INVERTER
CONTROLLER)

14

22

K

SLIPPING
DETECTOR

fr

K
l

O

YES   NO

# FIG. 5

<u>14</u>

141

21

804

fr

d/dt

COMPARATOR

142

READHESION
CONTROLLER

fs* +

fi*

+

# FIG. 6

# FIG. 7

# FIG. 8

EP 0 594 130 A1

# FIG. 9

(a) Imp

Im₁  Im₂  Im₃  Im₄  Im₅  Im₆

NEW CURRENT COMMAND GENERATED
BY THE PRESENT INVENTION

O →t

(b) fs

O →t

(c) Im

Im₁  Im₂  Im₃  Im₄  Im₅  Im₆

O →t

(d) fr

fr₅
fr₄
fr₃
fr₂
fr₁

SPEED
DIVISION

O →t

(e)

SLIPPING
DETECTION
SIGNAL

O →t

# FIG. IO

EP 0 594 130 A1

# FIG. 11

**PROCESSING PORTION RELATED TO SLIPPING PREVENTION** — 1110

S — 1000

FETCH fr, Im — 1010

COMPUTE SLIPPING DETECTION — 1020

SLIPPING ? — 1030

YES →

FLAD : 1 — 1112 — NO

YES

DETERMINATION OF SPEED ZONE — 1114

MEMORY(n) ← Im — 1116

$Im^* ←$ Im — 1118

NO

FLSD : 1 — 1040 — YES →

1100 — PROCESSING OF READHESION (t2~t3)

COMPUTE $fs^*$ (↑) — 1101

$Im ≧ Im^*$ — 1102 — < NO

YES ≧

CLEAR / SET

FLSD = 0 FLAD = 0 — 1103

FLAD = 1 — 1104

FLAG SET

FLSD = 1 — 1105

COMPUTE $fs^*$ (↓) — 1106

COMPUT Imp — 1050

CURRENT CONTROL PROCESSING — 1060

PROCESSING PORTION RELATED TO READHESION CONTROL

COMPUTE $fi^*$ — 1070

COMPUTE $Uc^*$ — 1080

E — 1090

FLAD ····· FLAG DURING ADHESION

FLSD ····· FLAG OF FIRST SLIPPING

19

# FIG. 12

(a) STATION

STARTING STATION

TURNING-AROUND STATION

A    B    Y    Z

(b) TRAIN SPEED

(c) SLIPPING DETECTION SIGNAL

(d) RECOVERY SIGNAL AT TIME OF NON-SLIPPING

(e) RECOVERY SIGNAL WHEN STOPPING AT STATION

(f) RECOVERY SIGNAL IN SHUTTLE SERVICE

(g) RECOVERY SIGNAL AT TIME OF NOTCH-OFF

→ t

EP 0 594 130 A1

# FIG. 13A

MOTOR CURRENT
COMMAND

MOTOR CURRENT

SLIP FREQUENCY

MODULATION
FACTOR

SLIPPING
DETECTION

INVERTER
FREQUENCY

t

# FIG. 13B

MOTOR CURRENT
COMMAND

MOTOR CURRENT

SLIP FREQUENCY

MODULATION
FACTOR

SLIPPING
DETECTION

INVERTER
FREQUENCY

IOS

t

21

# FIG. 14

EP 0 594 130 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 374 960 (HITACHI, LTD) 27 June 1990 * page 5, line 23 - line 40; figure 3A * | 1 | B60L3/10 |
| A | * figures 1,4 * | 5,6,11 | |
| X | PATENT ABSTRACTS OF JAPAN vol. 010, no. 289 (E-442)2 October 1986 & JP-A-61 106 094 (FUJI ELECTRIC CO LTD) 24 May 1986 * abstract * | 1 | |
| D,X | PATENT ABSTRACTS OF JAPAN vol. 013, no. 582 (M-911)21 December 1989 & JP-A-01 243 803 (TOSHIBA CORP) 28 September 1989 * abstract * | 2,5 | |
| X | PATENT ABSTRACTS OF JAPAN vol. 011, no. 263 (M-619)26 August 1987 & JP-A-62 068 003 (TOSHIBA CORP) 27 March 1987 * abstract * | 2,5 | |
| | | | TECHNICAL FIELDS SEARCHED (Int.Cl.5) |
| A | PATENT ABSTRACTS OF JAPAN vol. 014, no. 478 (M-1036)18 October 1990 & JP-A-02 193 502 (TOSHIBA CORP) 31 July 1990 * abstract * | 5,6,11 | B60L |

The present search report has been drawn up for all claims

| Place of search | Date of completion of the search | Examiner |
|---|---|---|
| THE HAGUE | 4 January 1994 | Bourbon, R |